# EUROPEAN PATENT APPLICATION

(11) **EP 3 038 346 A1**
(43) Date of publication of application: **29.06.2016**
(21) Application number: 14307161.1
(22) Date of filing: 23.12.2014
(51) Int. Cl.: H04N 5/235, G03B 15/05

(54) **Apparatus and method for optimizing a light source for image capturing**

(71) Applicant: Thomson Licensing, 92130 Issy-les-Moulineaux (FR)
(72) Inventor: Kervec, Jonathan, 35576 Cesson-Sévigné (FR); Stauder, Jürgen, 35576 Cesson-Sévigné (FR); Morvan, Patrick, 35576 Cesson-Sévigné (FR); Guermoud, Hassane, 35576 Cesson-Sévigné (FR)
(74) Representative: Huchet, Anne

(57) **Abstract**

Image saturation of a sensor pixel array is reduced by adjusting RGB color channel gains for an LED light source. Pixel saturation information is obtained from a sensor pixel array with an image on it illuminated by the LED light source. It is then analyzed to determine saturation levels of the captured image for each RGB component of the LED light source. The gain of each RGB color channel of the LED light source is then adjusted to reduce pixel saturation when using the LED light source for image capturing.

## Description

### FIELD OF THE INVENTION

The present principles relate to an apparatus and a method for controlling a light source, and more particularly, to an apparatus and a method for optimizing a light source to automatically control its amplitude.

### BACKGROUND

A camera typically includes a light to facilitate in exposing objects so that the camera can capture an image of the objects. At one point in history, the light or flash consisted of gun powder that was ignited to produce a brief light to aid in exposure. Because it was difficult to regulate how much or how long the light would last with this method, the captured images were often over or under exposed. Modern versions of the camera flash attempt to control the brightness and duration of the flash to obtain better exposures. However, just controlling these parameters does not always produce the best image colors. The color spectrum of the sun can be generally considered as an "ideal" spectrum for a camera's flash. One reason that this is true is that the color filters of a camera are designed to be close to the sensitivities of the human eye. If the flash has the sun's spectrum, colors are natural and color capturing artifacts of the camera such as metamerism operates as expected by the human eye.

### SUMMARY

An optimized RGB LED light source is combined with an adapted, automatically controlled light amplitude apparatus to avoid color channel sensor clipping. This facilitates in avoiding true hue loss of strongly colored objects. This is accomplished by taking advantage of potential modulations of an RGB LED in order to improve the capture quality of an image. A common way to drive a light before an image is captured is to, first, emit a light during a short period so that a camera can focus and second, emit a light during a fixed period and with a fixed amplitude and spectrum to actually capture an image. Thus, in one embodiment, a color sample can be taken with the first light and used to adjust the RGB LED light source during the actual image capture to achieve better image colors. This allows an RGB LED light source to be adapted to image/scene content, improving image rendering (less saturated areas per color band), keeping more details and preserving the true hue.

The present principles relates to an apparatus for obtaining an image, comprising an image sensor with an array of pixels; and a light source controller that controls a light source to assist the image sensor in capturing an image with the array of pixels; wherein the light source controller uses pixel saturation information from at least a portion of the pixel array to adjust a color spectrum produced by the light source during illumination.

According to an embodiment, the light source comprises a red/green/blue RGB light emitting diode LED.

According to an embodiment, the light source controller uses the pixel saturation information to adjust a gain value of a color channel of the RGB LED.

According to an embodiment, a gain value is inversely proportional to a percentage of saturated pixels in a whole image.

According to an embodiment, the light source is remote to the apparatus.

According to an embodiment, the light source is a flash of a device used to capture images.

According to an embodiment, the apparatus operates iteratively until a pixel saturation threshold level is met or a number of iterations is met.

The present principles also relates to a method for providing an image, comprising obtaining a first image with a sensor having an array of pixels and assisted by a light source; and using pixel saturation information from at least a portion of the pixel array to adjust a color spectrum produced by the light source during illumination.

According to an embodiment, the method further comprises using the pixel saturation information to adjust a gain value of a color channel of the RGB LED.

According to an embodiment, the method further comprises obtaining a second image with the sensor and assisted by the light source with the adjusted color spectrum; and using pixel saturation information from at least a portion of the pixel array to readjust the color spectrum produced by the light source during illumination

According to an embodiment, the method operates iteratively until a pixel saturation threshold level is met or a number of iterations is met.

According to an embodiment, the light source operates remotely.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

To the accomplishment of the foregoing and related ends, certain illustrative aspects of embodiments are described herein in connection with the following description and the annexed drawings. These aspects are indicative, however, of but a few of the various ways in which the principles of the subject matter can be employed, and the subject matter is intended to include all such aspects and their equivalents. Other advantages and novel features of the subject matter can become apparent from the following detailed description when considered in conjunction with the drawings.

### BRIEF DESCRIPTION OF THE DRAWINGS

FIG. 1 depicts a temporal recursive process for capturing images according to an embodiment of the present principles.
FIG. 2 depicts an example adaptation of an RGB spectrum balance for an LED for a given content in accordance with an embodiment of the present principles.
FIG. 3 depicts an example apparatus that uses the techniques described above to reduce image saturation in accordance with an embodiment of the present principles.
FIG. 4 depicts a flow diagram of a method of adjusting gain of an LED to reduce pixel saturation during image capturing in accordance with an embodiment of the present principles.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details. In other instances, well-known structures and devices are shown in block diagram form in order to facilitate describing the embodiments.

The present principles relate to lights used, for example, in cameras, mobile phones and/or tablets and the like to produce light for image capturing. The techniques adapt a Red/Green/Blue (RGB) light emitting diode (LED) light source (or flash) to scene content to be captured. The advantages of these techniques include 'limited saturation' (i.e., limiting the size of the areas in a captured image where colors are clipped due to excessive scene luminance, called saturation effect) and/or 'smart saturation' (i.e., limiting the derivation of hue in areas in a captured image where colors are clipped due to excessive scene luminance). Limited saturation is size or area oriented in relation to a pixel array and reduces clipped areas (over saturation) of pixels spatially. Smart saturation is color oriented in relation to a pixel array and reduces hue shifting by controlling clipping (over saturation) of color channels associated with the pixel array. One skilled in the art can appreciate that the techniques can be applied to a light source with a short duration (often referred to as a 'flash') and/or to a light source having a longer duration such as those used to capture multiple images (e.g., lights used with video capture and the like).

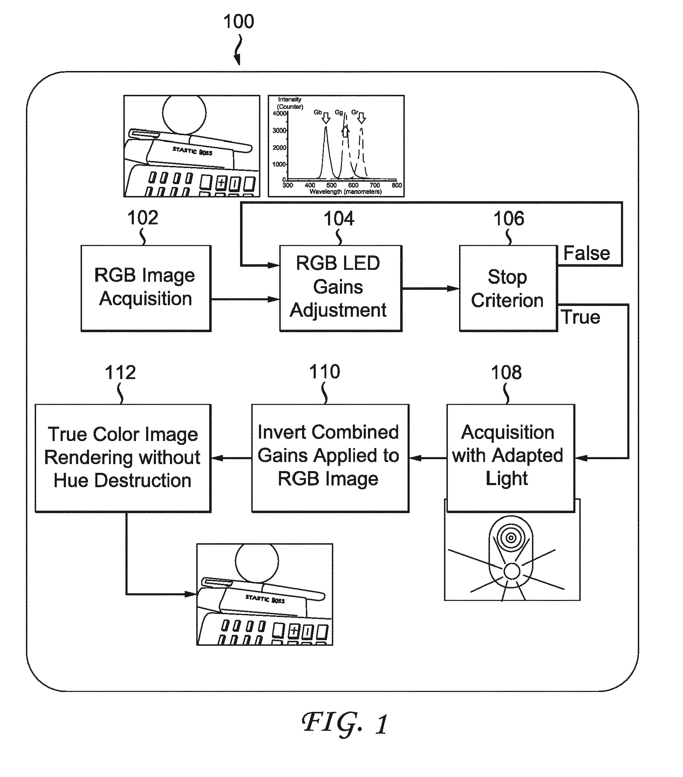

The techniques address acquisition in a low light environment where a light source illuminates a scene or at least part of a scene. In existing systems, for a given optical aperture, a light source or a flash has constant spectrum characteristics and the integration time is globally adapted to a whole scene or a part of it in order to avoid too many saturated pixels in a final acquired image. In contrast, in the present techniques, the light source spectrum characteristics are modulated by applying a variable gain on red, green and/or blue LED color channels separately, based on the lighted scene itself. To accomplish this, a temporal recursive embodiment for capturing images according to these techniques is illustrated in an example 100 in FIG. 1 and is discussed below.

The following steps can be performed to implement these techniques:
Step 1. A first image acquisition 102 is done using an RGB light source according to, for example, a predefined, desired white balancing (corresponding to a particular spectrum of RGB LEDs).
Step 2. An analysis is done of the saturated pixels in each RGB color channel of the first image acquisition and adapted gains 104 are then applied to the RGB LED light source. For example, each gain can be set inversely proportional to the percentage of saturated pixels in the whole image. The more saturated pixels in a channel, the less gain required for that channel.
Step 3. A subsequent acquisition is done until a stop criterion 106 is reached. For example, Step 2 is repeated until the number of clipped pixels (over saturated pixels) is under a threshold or a maximum number of iterations is reached.
Step 4. A second image acquisition is performed to capture an image with the adapted light source 108.
Step 5. The combined gains applied to the RGB image are then inverted 110 in order to recover a good white balance in a final image.
Step 6. A true color rendering without hue destruction is then obtained 112.

### Detailed description of Step 1:

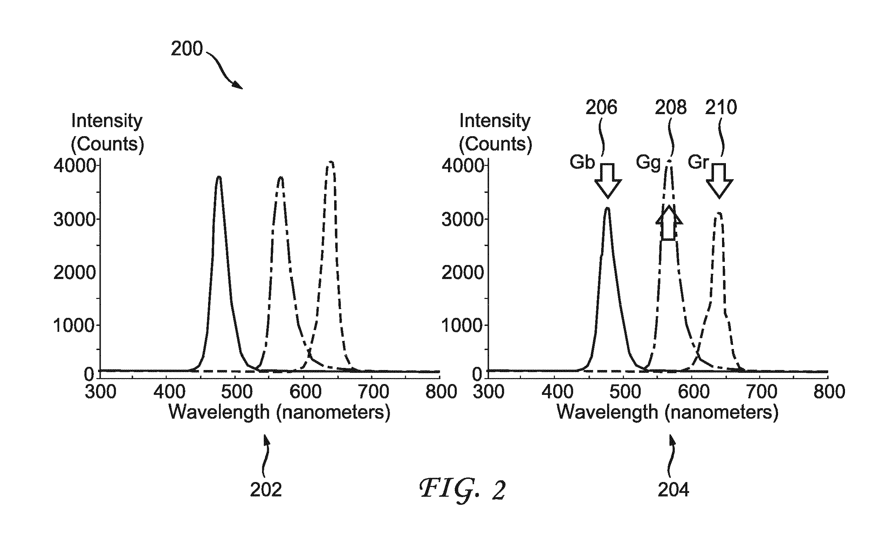

The predefined, desired white balancing of an RGB LED light source can be characterized in that it produces a desired target white. The stabilized current passing through each LED defines its brightness. With the first image acquisition, a dedicated gain can then be attributed to each LED current color channel (Gr, Gg, Gb) according to the saturated areas found in each RGB image capture. The RGB spectrum balance of the LEDs is then adapted to the content, for example, as shown in example 200 in FIG. 2. A typical RGB LED spectrum with unadjusted gain is shown in 202. The individual color channels or colors are then adjusted as shown in 204. The gain for blue (Gb) 206 is illustrated in the example as being adjusted downward (decreased). The green (or yellow green) gain (Gg) 208 is illustrated in the example as being adjusted upward (increased). The gain for red (Gr) 210 is illustrated in the example as being adjusted downward (decreased).

For example, if a saturated yellow object is present in a lighted scene (e.g., like a pen in the image shown in FIG. 1), the gains, for example, applied to the red and green LEDs are adapted such that the corresponding red and green parts of the spectrum decrease. This newly white balanced light source, with the modified spectrum characteristics, can be used for a second image acquisition in which a number of saturated pixels is reduced. The closer the camera's spectral filter characteristics are to the ones of the LEDs, the more simple the processing, since the goal is to control the saturation of the R, G, B sensor color channels individually. In this case, inverted gains (1/Gr, 1/Gg, 1/Gb) are applied to each RGB color channel in order to recover a good white balance in the final image (see, e.g., 110 in FIG. 1). The acquisition of an image can also be spatially sub sampled in order to limit the needed internal memory for the processing. In the general case, spectrum characteristics of LEDs and a camera's filters will differ. Therefore, a transfer function ***F*** is needed to take into account the influence of each gain on the different RGB acquisitions. This transfer function ***F*** depends on (Gr,Gg,Gb) gains and represents how much R, G and B vary for given gains. In this case, a reverted transfer function ***F'*** is applied to recover the white balance.

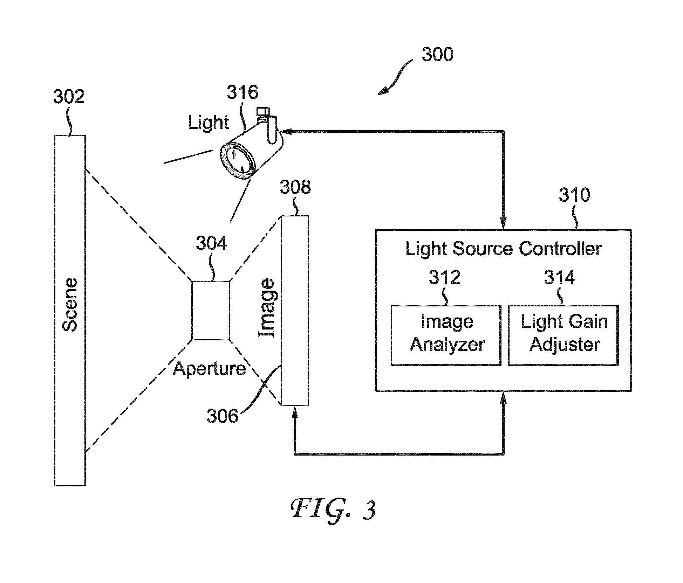

FIG. 3 illustrates an example apparatus 300 that uses the techniques described above to reduce image color saturation. A scene 302 is captured as an image 306 through an aperture 304 and onto a surface of a sensor pixel array 308. Pixel saturation information is obtained from the sensor pixel array 308 by a light source controller 310 that includes an image analyzer 312 and a light gain adjuster 314. The image analyzer 312 receives the pixel saturation information and analyzes it to determine saturation levels for each RGB color channel. The light gain adjuster 314 then adjusts gain values for each RGB color channel in order to reduce pixel saturation of the sensor pixel array 308. The light source controller 310 then adjusts the gain of each color channel of an LED light source 316 based on the pixel saturation information.

The apparatus 300 can utilize an iterative approach by using the light source 316 to light the scene 302 in order to capture subsequent images and pixel saturation information. The process can be repeated until a particular threshold level of saturation has been reached (e.g., becomes less than the threshold level) or until a number of iterations has been achieved. The threshold level can be based on a pixel by pixel saturation approach and/or by a percentage of saturation of the overall image and the like. The light source 316 can be incorporated into a device and/or be remote to a device with communication provided through wired and/or wireless means. The light source 316 can be used as a flash (momentary lighting) and/or as a continuous lighting source (e.g., video capturing). When used as a continuous lighting source, the light source 316 can accept continuous gain adjustments based on continuous monitoring of the pixel saturation information from the sensor pixel array 208.

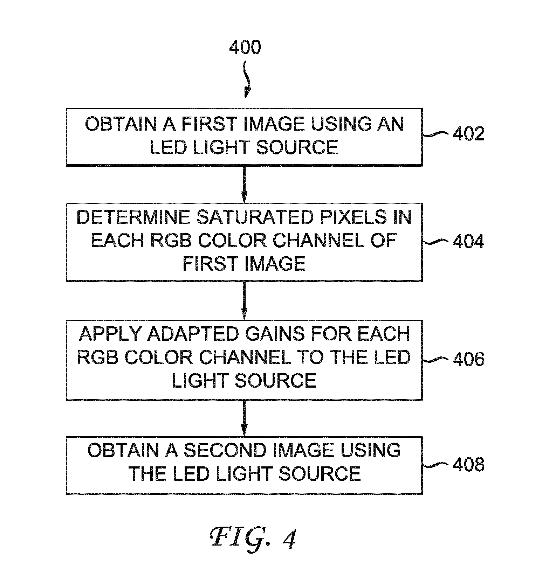

In view of the exemplary apparatus shown and described above, methodologies that can be implemented in accordance with the embodiments will be better appreciated with reference to the flow chart of FIG. 4. While, for purposes of simplicity of explanation, the methodologies are shown and described as a series of blocks, it is to be understood and appreciated that the embodiments are not limited by the order of the blocks, as some blocks can, in accordance with an embodiment, occur in different orders *and*/*or* concurrently with other blocks from that shown and described herein. Moreover, not all illustrated blocks may be required to implement the methodologies in accordance with the embodiments.

FIG. 4 is a flow diagram of a method 400 of adjusting gain of an LED to reduce pixel saturation during image capturing. A first image is obtained using an LED light source 402. This can be accomplished in one embodiment using a device with a sensor composed of a pixel array. Light from an RGB LED illuminates a scene, and its image is then captured by the pixel array. A predetermined or default RGB LED gain settings can be used for the initial image capture. The particular spectrum of RGB LED light usually corresponds to a desired white balancing. The saturated pixels of each RGB color channel of the first image is then determined 404. The pixel saturation information can be obtained from the sensor after capturing the initial image. In one embodiment, an acquisition of an image can also be spatially sub sampled as well in order to reduce the amount of memory needed for processing. Typically, spectrum characteristics of LEDs and a camera's filters differ. Therefore, a transfer function ***F*** is needed to take into account the influence of each gain on the different RGB acquisitions. This transfer function ***F*** depends on (Gr,Gg,Gb) gains and represents how much R, G and B vary for given gains. In this case, a reverted transfer function ***F'*** is applied to recover the white balance.

Adapted gains for each RGB color channel of the LED light source are then applied to the LED light source 406. The adapted gains help to reduce and/or eliminate pixel saturation when a subsequent image is obtained of the scene. In one embodiment, each gain can be proportional to a percentage of saturated pixels in a whole captured image. A second image is then obtained using the LED light source with the adapted gains 408. The image capture/LED gain adjustment/image capture routine can be iteratively run until a reduced pixel saturation threshold is reached and/or until a predetermined number of iterations have been accomplished. In one embodiment, combined gains that are applied to an RGB LED light source image can be inverted to achieve a good white balance in a final image, obtaining a true color rendering without hue destruction. One skilled in the art can appreciate that the RGB LED light source can be a flash and/or a continuous light source. For continuous light source embodiments, adjustments to a gain value of an RGB color channel can be made on a substantially continuous basis (image capture, gain adjustment, image capture). Other embodiments for video can include providing gain adjustments for every X number of captured frames. This reduces a required amount of processing while still obtaining superior color renderings. This allows devices such as a video camera and the like to provide true color renderings of the video when using a continuous light source.

What has been described above includes examples of the embodiments. It is, of course, not possible to describe every conceivable combination of components or methodologies for purposes of describing the embodiments, but one of ordinary skill in the art can recognize that many further combinations and permutations of the embodiments are possible. Accordingly, the subject matter is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. An apparatus for obtaining an image, comprising:
an image sensor with an array of pixels; and
a light source controller that controls a light source to assist the image sensor in capturing an image with the array of pixels; wherein the light source controller uses pixel saturation information from at least a portion of the pixel array to adjust a color spectrum produced by the light source during illumination.

2. The apparatus of claim 1, wherein the light source comprising a red/green/blue RGB light emitting diode LED.

3. The apparatus of claim 2, wherein the light source controller uses the pixel saturation information to adjust a gain value of a color channel of the RGB LED.

4. The apparatus of claim 3, wherein a gain value is inversely proportional to a percentage of saturated pixels in a whole image.

5. The apparatus of claim 1, wherein the light source is remote to the apparatus.

6. The apparatus of claim 1, wherein the light source is a flash of a device used to capture images.

7. The apparatus of claim 1 operates iteratively until a pixel saturation threshold level is met or a number of iterations is met.

8. A method for providing an image, comprising:
obtaining a first image with a sensor having an array of pixels and assisted by a light source; and
using pixel saturation information from at least a portion of the pixel array to adjust a color spectrum produced by the light source during illumination.

9. The method of claim 8, wherein the light source comprising a red/green/blue RGB light emitting diode LED.

10. The method of claim 9, further comprising:
using the pixel saturation information to adjust a gain value of a color channel of the RGB LED.

11. The method of claim 10, wherein a gain value is proportional to a percentage of saturated pixels in a whole image.

12. The method of claim 8, further comprising:
obtaining a second image with the sensor and assisted by the light source with the adjusted color spectrum; and
using pixel saturation information from at least a portion of the pixel array to readjust the color spectrum produced by the light source during illumination

13. The method of claim 8 operates iteratively until a pixel saturation threshold level is met or a number of iterations is met.

14. The method of claim 8, wherein the light source is a flash of a device used to capture images.

15. The method of claim 8, wherein the light source operates remotely.
